# EUROPEAN PATENT APPLICATION

(11) **EP 4 175 345 A1**
(43) Date of publication of application: **03.05.2023**
(21) Application number: 21834447.1
(22) Date of filing: 25.06.2021
(51) Int. Cl.: H04W 24/02

(54) **MESH NETWORKING TEST METHOD, APPARATUS AND DEVICE AND STORAGE MEDIUM**

(30) Priority: 29.06.2020 CN 202010602205
(71) Applicant: ZTE Corporation, Shenzhen, Guangdong 518057 (CN)
(72) Inventor: ZHAO, Chengqing, Shenzhen, Guangdong 518057 (CN)
(74) Representative: Novagraaf Technologies
(86) International application number: PCT/CN2021/102449
(87) International publication number: WO 2022/001884

(57) **Abstract**

Disclosed are a method, apparatus and device for testing a mesh networking, and a storage medium, which belong to the technical field of communications. The method includes: when a roaming device connected to a mobile terminal roams according to a predetermined path mark, detecting a currently accessed router signal; when it is determined that the roaming handover of the mobile terminal fails, the roaming device collects roaming data of the mobile terminal, and generates a test report according to the collected roaming data.

## Description

### Cross-Reference to Related Application

The present invention is based on Chinese Patent Application No. 202010602205.2, filed on 29 June 2020, and claims the priority of the Chinese Patent Application, which is incorporated herein by reference in its entirety.

### Technical Field

Embodiments of the present invention relate to the field of communications technologies, and in particular, to a method, an apparatus, and a device for testing a mesh networking of a wireless network, and a storage medium.

### Background

In the new era of universal interconnection, home terminal routers have been progressing to power cats, repeater era, and the mesh networking of seamless roaming experience has been increasingly popular. Various manufacturers are launching a mesh product. At present, both national and international are trying and commercial. Various manufacturers have invested a lot of manpower to develop, test, and analyze and locate problems. Due to the shortcomings of the mesh networking, a plurality of workers are required to perform a test, and a large amount of repeated walking roaming is required, which brings a lot of workload to a later test, and causes waste of personnel.

### Summary

Provided is a testing method for mesh networking. The method comprises the following steps: When a roaming device connected to a mobile terminal roams according to a predetermined path mark, detecting a currently accessed router signal; when it is determined that the roaming handover of the mobile terminal fails, the roaming device collects roaming data of the mobile terminal, and generates a test report according to the collected roaming data.

An embodiment of the present invention provides a testing apparatus for mesh networking, comprising: A detection module, configured for a roaming device connected to a mobile terminal to detect a currently accessed router signal during roaming according to a predetermined path mark; a test module, configured to for the roaming device to collect roaming data of a mobile terminal and generating a test report according to the collected roaming data when it is determined that a roaming handover of the mobile terminal fails.

Embodiments of the present invention also provide a test device for mesh networking. The device comprises a memory and a processor, wherein a program stored in the memory and executable by the processor, and a data bus for implementing connection and communication between the processor and the memory. Upon the program is executed by the processor, to implement the steps of the above method.

Provided is a computer readable storage medium. The storage medium stores one or more programs, wherein the one or more programs can be executed by one or more processors so as to implement the steps of the above method.

### Brief Description of the Drawings

Fig. 1 is a flowchart of a method for testing mesh networking according to a first embodiment of the present invention;
Fig. 2 is a schematic diagram of a device for testing mesh networking according to a second embodiment of the present invention;
Fig. 3 is a block diagram of a roaming device control core according to an embodiment of the invention;
Fig. 4 is a flowchart of a roaming device test according to an embodiment of the invention;
Fig. 5 is a flowchart of acquiring a Log according to an embodiment of the present invention;
Fig. 6 is a flowchart of obtaining a packet according to an embodiment of the present invention;
Fig. 7 is a diagram of a roaming device test scenario according to an embodiment of the present invention;
Fig. 8 is a schematic diagram of a customer demonstration scenario according to an embodiment of the present invention.

### Detailed Description of the Embodiments

It should be understood that specific embodiments described herein are merely used to explain the present invention, but are not intended to limit the present invention.

In the following description, the use of a suffix such as "module", "component", or "unit" for denoting an element is merely for facilitating the description of the present invention, and has no particular meaning per se. Thus, "module", "component", or "unit" may be used mixedly.

The main purpose of the embodiments of the present invention is to propose a test method, apparatus and device for mesh networking, and a storage medium. The present invention is intended to improve the test efficiency and avoid a great waste of personnel. The automatic test system of the present invention can obviously save manpower, improve the test efficiency and accurately locate a fast fault.

### Embodiment 1

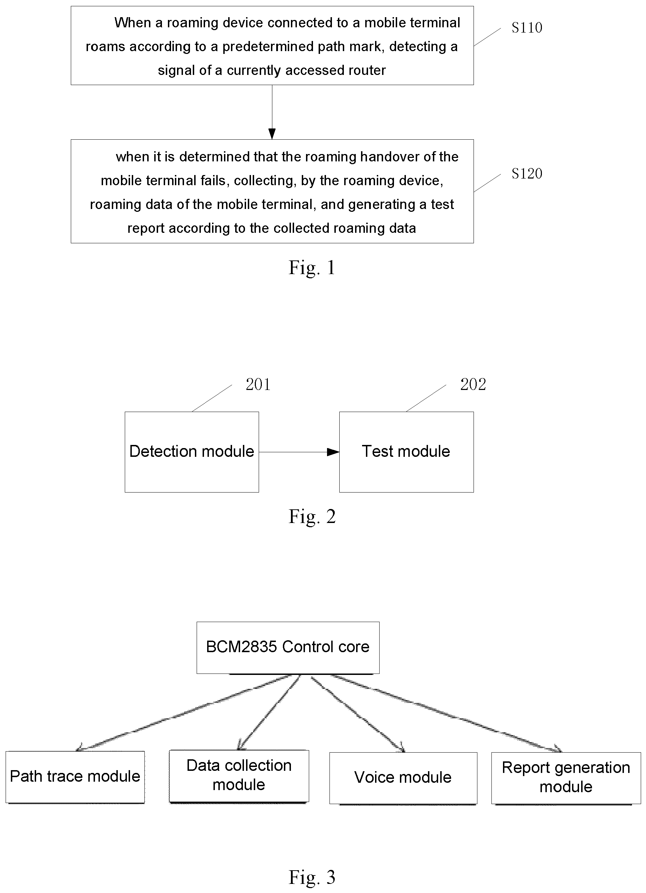

As shown in Fig. 1, this embodiment provides a method for testing mesh networking. The method includes the following steps:
Step S110: When a roaming device connected to a mobile terminal roams according to a predetermined path mark, detecting a currently accessed router signal;
   For example, a BCM2835 chip-based roaming robot controlling a core performs roaming according to a roaming path, comprising: after a roaming robot (a roaming device) wakes up by means of a designated word, controlling the roaming robot based on the BCM2835 chip, and performing directional control on the all-around wheels of the roaming robot through two drives; an opencv image recognition technology is used to recognize a roaming robot path so as to achieve the purpose of simulating a person to roam; a roaming robot based on a BCM2835 chip control core is connected to a mobile phone via a USB, and a data passive read test can be performed on the mobile phone; the Roaming robot of the BCM2835 chip control core performs roaming pre-value storage on the read data.
Step S120: if it is determined that the roaming handover of the mobile terminal fails, the roaming device collects roaming data of the mobile terminal and generates a test report according to the collected roaming data.

In addition, in the roaming process, the mobile terminal is connected to the roaming device through the USB to perform passive reading and collection.

The information is collected at a roaming reservation point. In the roaming process, the switching fails or the voice is broadcasted successfully. The BCM2835 chip controls the core to perform roaming pre-value storage on the read data and then compares the set roaming values, and then the BCM2835 chip controls the core to perform voice broadcasting and lighting processing, and the roaming succeeds in lightening green and light and the roaming succeeds in playing.

After a specified roaming, an output report is generated, which comprises a switching delay of an output at each point, a roaming time, etc. The key log and packet capture is obtained when the roaming has failed; auto-alignment with standard protocol flow diagrams, export analysis reports.

The roaming device connected to a mobile terminal roaming according to a predetermined path flag comprises: the roaming device identifies the predetermined path flag to obtain a running path; the roaming device roams according to the running path. Specifically, the roaming path is a black tape path identified by an opencv image recognition technique.

The mesh networking comprises a primary router and N secondary routers. The running path of the roaming device is a running path which takes the primary router as a starting point and an end point and sequentially passes through the N secondary routers.

After detecting the currently accessed router signal, the embodiment of the present invention further comprises: when it is detected that a switching from the currently accessed router signal to the next router signal is detected, judging whether the roaming switching of the mobile terminal is successful. Specifically, when a signal for switching from a currently accessed routing signal to a next router is detected, determining whether the roaming switching of the mobile terminal is successful comprises: when the roaming device detects that the signal for switching from the currently accessed routing signal to the next router is detected, the next router sending a switching instruction to the mobile terminal, so that the mobile terminal is switched from the currently accessed router to the next router; when the roaming device reads that an access router signal of the mobile terminal is a next router signal, determining that the roaming switching of the mobile terminal is successful; when reading the access router signal of the mobile terminal other than the next router signal, the roaming device judges that the roaming switching of the mobile terminal fails.

### Embodiment 2

Fig. 2 is a schematic diagram of a test apparatus for mesh networking according to a second embodiment of the present invention. As shown in Fig. 2, the test apparatus includes a detection module 201 and a test module 202.

A detection module 201, which is used for a roaming device connected to a mobile terminal to detect a currently accessed router signal during roaming according to a predetermined path mark; the test module 202 is used for collecting, by the roaming device, roaming data of the mobile terminal and generating a test report according to the collected roaming data if it is determined that the roaming handover of the mobile terminal fails.

The detection module 201 includses: a roaming unit, configured to identify a predetermined path mark to obtain a running path, and perform roaming according to the running path; a detection unit, configured to detect a currently accessed router signal.

The mesh networking comprises a primary router and N secondary routers. The running path of the roaming device is a running path which takes the primary router as a starting point and an end point and sequentially passes through the N secondary routers.

A third embodiment of the present invention provides a test device for mesh networking. The device comprises a memory and a processor, a program stored in the memory and executable by the processor, and a data bus for implementing connection and communication between the processor and the memory. The program is executed by the processor to implement the specific steps shown in Fig. 1.

A fourth embodiment of the present invention provides a computer readable storage medium. The computer readable storage medium stores one or more programs. The one or more programs may be executed by one or more processors, so as to implement specific steps shown in Fig. 1.

As shown in Fig. 3, the automatic robot roaming method proposed in the embodiments of the present invention comprises a path finding module, a data collection module, a voice module and a report generation module based on an automatic control core board of a BCM2835 chip.

The embodiments of the present invention propose a method: in a first step, multi-person cooperation is required for a mesh test, and an unmanned trolley is designed based on a control core of a BCM2835 chip; in a second step, for a roaming path, based on an opencv image recognition technology, different color adhesive tapes are pasted onto the demand path, binarization is performed by means of an image recognition technology, and roaming path tracking is performed so that a roaming device walks. In a third step, roaming data synchronization, in which a test device (a mobile phone) is connected to a control core of a BCM2835 chip via a USB, collects roaming data, and generates a test report after one round of roaming.

Finally, the present invention constructs a mesh automatic test system, which is composed of an automatic roaming robot body (a roaming device), a path recognition method and a data acquisition system.

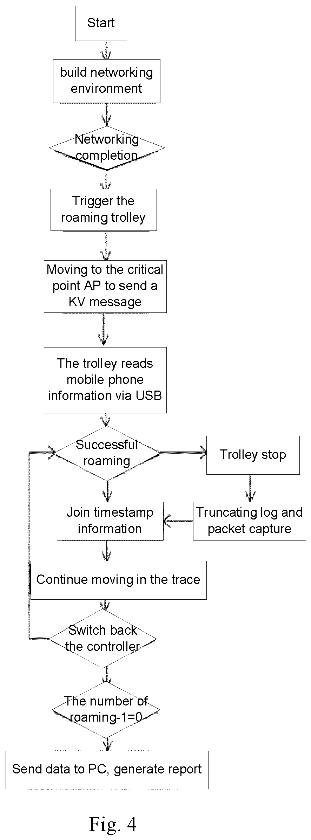

Fig. 4 is a flowchart of a roaming car test according to an embodiment of the present invention. As shown in Fig. 4, the flowchart includes:
4.1. Establishing a test networking environment;
4.2. A voice wakes up a roaming robot to start roaming according to a track;
4.3. Recording a roaming device key parameter via a USB;
4.4. Judging whether the roaming is successful;
4.5. A voice broadcast roaming condition;
4.6. Continuing roaming and ending the direct route;
4.7. Querying the number of times that roaming is required, and determining whether to continue roaming;
4.8. After the roaming ends, a roaming report is generated, the time is synchronized, the key time node log and the packet capturing are captured, and compared with a standard protocol to generate an analysis test report.

### Embodiment 5

Testing environment: in an environment about 120 square meter, a primary router (controller) and two secondary routers (agent 1 and agent 2) perform star networking and tree networking; attenuation from the controller is at -65DB to determine the positions of agent 1 and agent 2; and a running path of a roaming device is taking the the controller as a starting point and an end point, and sequentially passes through running paths of agent 1 and agent 2.

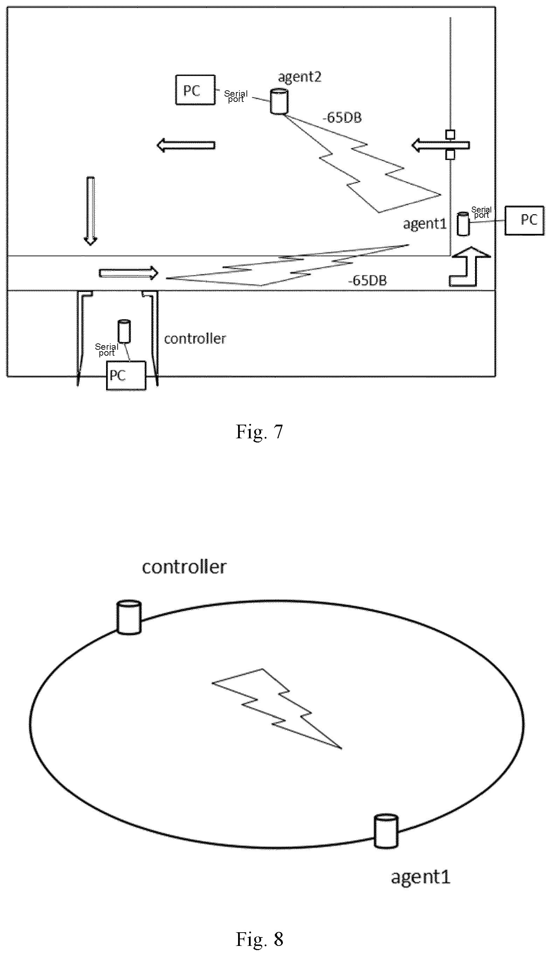

As shown in Fig. 7.

The embodiments of the present invention is mainly applied to a research and automation testing of the mesh network roaming scenario, and at the same time, it can provide a customer with scenarios such as a demonstration mesh, education training, etc.

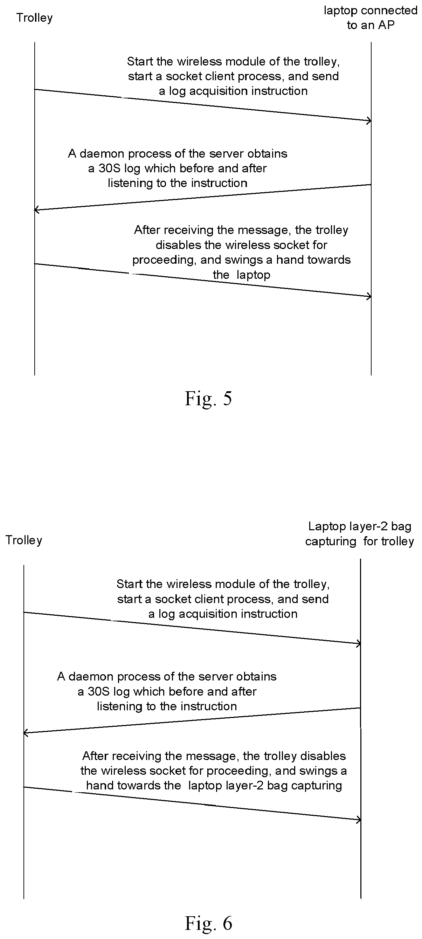

This embodiment mainly describes the following application scenario: a system testing background rapidly finds a basic problem. After using a wireless network signal scanning tool inssider to scan and determine a location, a wps is first set according to WIFI protection of a controller, then a device agent1 is used to perform networking according to the wps of an angent1, and agent2 is used to perform networking in the same way. Each controller and agent needs to be connected to a serial port. So that the small vehicle can obtains the log. The method for obtaining the log is implemented through a socket of socket. After networking is completed, a roaming trolley is awakened by the voice, a track is searched and roamed according to a designated track, and during the running process of a travelling trolley, a signal strength is continuously recorded in the roaming trolley; when a switching signal is adjacent, the vehicle speed is reduced, and the pedestrian is roamed according to the normal walking speed, when a critical point of switching between the controller and the agent1 is reached, the agent 1 may send a mobile phone switching instruction to enable the mobile phone to perform switching, the trolley is connected to the mobile phone via the USB, and whether the switching of the mobile phone is successful is recorded. If the roaming succeeds, there is no need to intercept the packet capturing file and the log, and if the roaming fails, the trolley will actively intercept the packet capturing file at the time limit point corresponding to the packet capturing notebook located on one level of the trolley and the log of the notebook connected to the agent1, as shown in Figs. 5 and 6. Then continue roaming and run to agnt2. The same method records related information, and if it is finally determined to switch to the controller, it can be determined that the roaming ends; if it is finally determined that the roaming from anget2 to the controller fails, it cannot be determined that the roaming ends, and after waiting for one minute, the trolley returns to the starting point according to the track. If the roaming succeeds and fails, the voice module performs voice broadcasting. Because the performance of the trolley single board is limited, after the collection of the information is completed when the roaming ends, the information is returned to the PC, and the PC analyzes the data and outputs a report.

The embodiments of the present invention also apply to a marketing display scenario. As shown in Fig. 8, a primary router (controller) and a secondary router (agent 1) perform networking.
1) In a marketing scenario, setting a ring-shaped roaming track.
2) In a relatively close range, a switching signal strength value of an access point (AP) is adjusted to be lower, and an AP is placed on an upper edge of a track. The networking mode is the same as a mesh automation networking scenario.
3) When the mesh has successfully roamed, the trolley flashes green, and when the mesh has failed, the trolley flashes red.

Embodiments of the present invention provide a test method, apparatus and device for mesh networking, and a storage medium. In order to avoid the waste of manpower, a roaming robot is designed. The method has the advantages of low costs, saving manpower, rapid testing, rapid analysis and positioning basic problems, being able to embed any automation scenario, and implementing an integrated test.

Those of ordinary skill in the art can appreciate that all or some of the steps, systems, and functional blocks/units of the methods disclosed above can be implemented as software, firmware, hardware, and any suitable combination thereof.

In a hardware implementation, the division between functional modules/units referred to in the above description does not necessarily correspond to the division of physical components; for example, one physical component may have multiple functions, or one function or step may be cooperatively performed by several physical components. Some or all of the physical components may be implemented as software executed by a processor, such as a central processor, digital signal processor, or microprocessor, or as hardware, or as an integrated circuit, such as an application specific integrated circuit. Such software may be distributed on computer-readable media, which may include computer storage media (or non-transitory media) and communication media (or transitory media). As is well known to those of ordinary skill in the art, the term computer storage media includes volatile and nonvolatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile discs (DVD) or other optical disk storage, magnetic cassettes, magnetic tape, magnetic disk storage or other magnetic storage devices, or any other medium which can be used to store the desired information and which can be accessed by a computer. In addition, communication media typically embodies computer readable instructions, data structures, program modules, or other data in a modulated data signal such as a carrier wave or other transport mechanism and may include any information delivery media as is known to those of ordinary skill in the art.

The embodiments of the present disclosure have been described above with reference to the accompanying drawings, but are not intended to limit the scope of the present disclosure. Any modification, equivalent replacement and improvement made by a person skilled in the art without departing from the scope and spirit of the present invention shall belong to the scope of the right of the present invention.

## Claims

1. A method for testing mesh networking. The method comprises:
when a roaming device connected to a mobile terminal roams according to a predetermined path mark, detecting a currently accessed router signal;
when it is determined that the roaming switching of the mobile terminal fails, collecting, by the roaming device, roaming data of the mobile terminal, and generating a test report according to the collected roaming data.

2. The method according to claim 1, wherein when a roaming device connected to a mobile terminal roams according to a predetermined path mark comprises:
the roaming device identifies the predetermined path flag to obtain a running path; and
roaming, by the roaming device, according to the running path.

3. The method according to claim 2, wherein the mesh network comprises one primary router and N secondary routers, and the running paths of the roaming device are running paths sequentially passing through the N secondary routers by taking the primary router as a starting point and a terminating point.

4. The method according to any one of claims 1 to 3, wherein after detecting the currently accessed router signal, the method further comprises:
determining whether the roaming switching of the mobile terminal is successful when switching from the currently accessed routing signal to the next router signal is detected.

5. The method according to claim 4, wherein determining whether the roaming switching of the mobile terminal is successful when switching from the currently accessed router signal to the next router signal is detected comprises:
when the roaming device detects switching from a currently accessed router signal to a next router signal, the next router enables the mobile terminal to switch from the currently accessed router to the next router by sending a switching instruction to the mobile terminal;
when the roaming device reads that the access router signal of the mobile terminal is not the next router signal, judging that the roaming switching of the mobile terminal is successful;
when the roaming device reads that the access router signal of the mobile terminal is not the next router signal, judging that the roaming switching of the mobile terminal fails.

6. An apparatus for testing mesh networking, comprising:
a detection module, configured to a roaming device connected to a mobile terminal to detect a currently accessed router signal during roaming according to a predetermined path mark;
a test module, configured to the roaming device to collect roaming data of the mobile terminal and generate a test report according to the collected roaming data when it is determined that the roaming switching of the mobile terminal fails.

7. The apparatus according to claim 6, wherein the detection module comprises:
a roaming unit, configured to identify the predetermined path mark to obtain a running path, and roam according to the running path;
a detection unit, configured to detect a currently accessed router signal.

8. The apparatus according to claim 7, wherein the mesh networking comprises one primary router and N secondary routers, and the running paths of the roaming devices are running paths starting from and ending at the primary router and sequentially passing through the N secondary routers.

9. A device for testing mesh networking. The device comprises a memory, a processor, a program stored on the memory and capable of running on the processor, and a data bus for implementing connection communication between the processor and the memory. The program, when executed by the processor, implements the steps of the test method for mesh networking according to any one of claims 1 to 5.

10. A computer readable storage medium, wherein the storage medium stores one or more programs, and the one or more programs can be executed by one or more processors, so as to implement the steps of the method for testing mesh networking according to any one of claims 1 to 5.
